Europäisches Patentamt

European Patent Office

Office européen des brevets

(19)

(11) Numéro de publication : **0 327 439 B1**

(12)

# FASCICULE DE BREVET EUROPEEN

(45) Date de publication du fascicule du brevet :
27.11.91 Bulletin 91/48

(51) Int. Cl.$^5$ : **F01N 3/02, B01D 49/00**

(21) Numéro de dépôt : **89400258.3**

(22) Date de dépôt : **31.01.89**

(54) **Dispositif d'élimination par micro-ondes des particules carbonnées contenues dans les gaz d'échappement de moteurs thermiques.**

(30) Priorité : **05.02.88 FR 8801341**

(43) Date de publication de la demande :
**09.08.89 Bulletin 89/32**

(45) Mention de la délivrance du brevet :
**27.11.91 Bulletin 91/48**

(84) Etats contractants désignés :
**DE ES GB IT**

(56) Documents cités :
**EP-A- 0 191 437**
**EP-A- 0 221 805**
**DE-A- 3 141 156**
**DE-C- 580 807**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Ollivon, Michel**
**20, rue Mot**
**F-94120 Fontenay-sous-Bois (FR)**
Inventeur : **Renevot, Gérard**
**5, rue Rebeval**
**F-75019 Paris (FR)**
Inventeur : **Berteaud, André-Jean**
**10, Allée des Marronniers**
**F-91210 Draveil (FR)**

(74) Mandataire : **Ernst-Schonberg, Michel et al**
**R.N.U.R. S. 0804 B.P. 103 8 & 10, avenue Emile-Zola**
**F-92109 Boulogne Billancourt (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention concerne un dispositif d'élimination par micro-ondes des particules carbonées contenues dans les gaz d'échappement des moteurs thermiques.

L'invention concerne plus particulièrement un dispositif pour éliminer les particules carbonées contenues dans les gaz d'échappement d'un moteur Diésel dans lequel une source à micro-ondes et un conducteur du champ électromagnétique généré par ladite source est en liaison avec un résonateur monté sur un élément de la conduite des gaz d'échappement contenant un insert tel qu'un filtre à particules.

La publication EP-A-0221805 propose deux solutions pour obtenir la combustion des particules carbonées soit en les faisant passer, soit séjourner dans les zones du résonateur où le champ électromagnétique est maximum.

La présente invention se rapporte à l'utilisation d'un mode d'excitation d'une cavité cylindrique constitutive du résonateur adapté à l'emploi de filtres à particules en céramique disponibles dans l'industrie.

L'invention a pour objet un dispositif d'élimination des particules carbonées et de nettoyage par micro-ondes d'un filtre placé dans un résonateur cylindrique accordé et excité en mode TM Olp générant un champ électromagnétique transversal adapté à la matière constitutive du filtre tandis qu'une partie du flux de gaz d'échappement traverse le filtre et apporte l'oxygène nécessaire à la combustion des particules carbonées retenues dans ce filtre.

Un second objet de l'invention est un moyen de mise en oeuvre du processus nettoyage du filtre à la température des gaz d'échappement par suite d'une inversion pilotée du sens de circulation d'une partie de ces gaz qui traversent ce filtre dans le but d'assurer la combustion du carbone déposé sur la face avant du filtre et d'améliorer le taux d'élimination des particules par rapport à la technique antérieure qui met en oeuvre un courant unidirectionnel au travers du filtre des gaz d'échappement.

Un troisième objet de l'invention est la mise en oeuvre d'un résonateur qui contient un filtre dont le diamètre est sensiblement inférieur au diamètre intérieur du résonateur et dont les extrémités amont et aval sont décalées vers l'intérieur de la cavité résonnante sur une distance prédéterminée. Cette disposition favorise la combustion des particules arrêtées à la périphérie du filtre et permet l'utilisation optimale du filtre sans modification de la structure de celui-ci.

De la sorte, les extrémités amont et aval du filtre délimitent avec le résonateur deux chambres dans lesquelles débouchent respectivement deux arrivées du champ électromagnétique.

Dans le dispositif ainsi réalisé, il est possible de charger plus complètement la cavité du résonateur et d'exciter celle-ci par un champ électromagnétique transversal en mode TM Olp dans lequel O, 1 et p sont respectivement les modes de vibration du champ électromagnétique dans un système de coordonnées cylindriques où p est un nombre entier de vibrations du champ suivant l'axe longitudinal du résonateur tandis que O et 1 sont les modes de vibrations suivant la direction radiale définie par l'angle O par rapport audit axe longitudinal.

Selon un exemple de réalisation du dispositif, le champ électromagnétique est transmis dans la cavité résonnante par des antennes émettrices selon une direction transversale perpendiculaire à la paroi de la cavité.

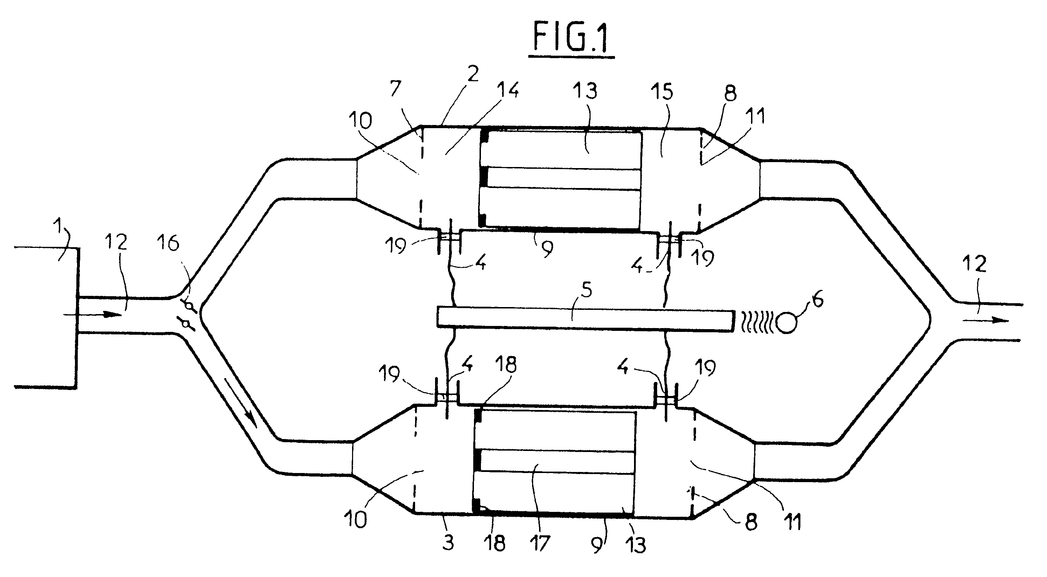

D'autres caractéristiques et avantages du dispositif apparaîtront à la description d'un mode de réalisation de celui-ci faite en référence au dessin annexé dans lequel la figure 1 est un exemple de réalisation du dispositif mettant en oeuvre deux filtres dans un système de régénération.

La Figure 2 est une vue en coupe axiale de la cavité résonnante avec un filtre qui montre la répartition des lignes de force du champ électromagnétique dans le mode d'excitation TM 0, 1, 3.

La figure 3 est une vue en coupe radiale de la cavité résonnante qui montre la répartition radiale du champ électromagnétique.

La figure 4 est une vue en coupe axiale d'une variante de réalisation du filtre placé dans la cavité résonnante.

En se référant à la figure 1, on voit un moteur 1 dont le conduit d'échappement alimente un dispositif d'élimination par micro-ondes tel que décrit dans la publication EP-A-0221805 déposée au nom de la demanderesse. Au moteur 1 est associé un système à deux cavités résonnantes 2, 3 disposées en parallèle dans lesquelles débouchent, au moyen d'antennes 4 ou d'orifices de couplage à iris, des micro-ondes de longueur d'onde λ véhiculées par un conducteur creux 5 du champ électromagnétique, à partir d'une source 6 à micro-ondes. Les cavités résonnantes 2, 3 comprennent respectivement des parois frontales 7, 8 perforées, séparées axialement d'une distance prédéterminée et une paroi périphérique 9 cylindrique ou elliptique. Les parois frontales 7, 8 possèdent respectivement un orifice principal d'admission 10 et d'échappement 11 pour les gaz d'échappement du moteur 1 disposés concentriquement au centre des parois 7, 8 et dont les diamètres prédéterminés assurent la concentration des ondes entre les parois. Dans chacune des cavités 2, 3 est placé un insert filtrant 13 isolé thermiquement à sa périphérie, dont le diamètre est ici sensiblement égal à celui de la cavité et dont les extrémités amont et aval définies conventionnellement d'après le sens de circulation des gaz sont décalées vers l'intérieur de la cavité et délimitent deux chambres 14, 15 dans lesquelles débouchent, au travers d'un matériau diélectrique 19, des antennes 4 ou des iris qui permettent l'injection des micro-ondes générées par la source 6 au travers d'ouvertures circulaires ou rectangulaires.

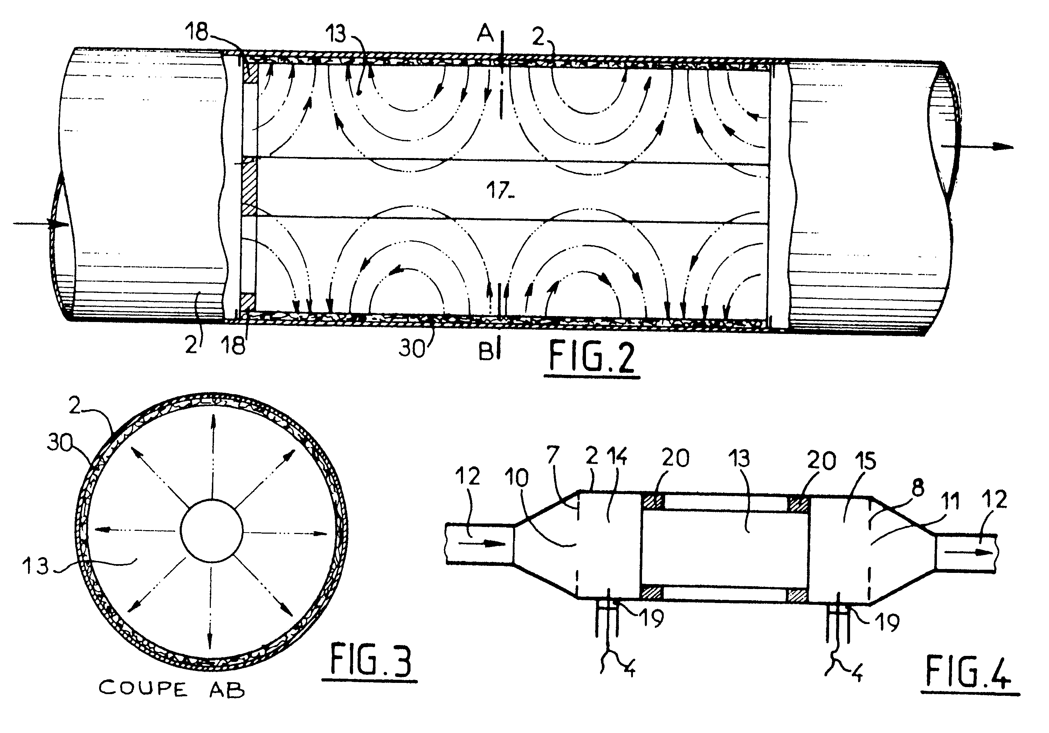

En excitant la cavité 2 ou 3 en mode TM 0lp dans lequel p = 3 conformément aux figures 2 et 3, ont voit que la répartition des lignes de force du champ électrique sont telles que leur concentration est maximale.

A titre d'exemples, on utilisera un filtre à base de fibres de mullite ou tout autre matière à pertes diélectriques faibles ou nulles et dont les propriétés réfractaires permettent la combustion directe des particules carbonées sans échauffement préalable du filtre, c'est-à-dire avec un minimum de dépense d'énergie.

Selon le diamètre du filtre employé, celui-ci possède un évidement central longitudinal 17 obturé sur la face amont dans le but d'éliminer la concentration des micro-ondes au coeur du filtre et suivant son axe et de réduire sa température et le risque de destruction à la suite d'un échauffement excessif. L'insert filtrant 13 est, par ailleurs, isolé thermiquement de la cavité résonnante par interposition d'un matériau 30.

Dans le but de supprimer les dépôts de particules à la périphérie du filtre dans une zone difficile à nettoyer consécutivement à une concentration insuffisante des micro-ondes, on utilise un masque d'extrémité en forme de couronne circulaire 18 qui délimite dans le filtre une zone extérieure annulaire dans laquelle les particules ne peuvent se fixer. Par voie de conséquence, on obtient de la sorte :

— une meilleure répartition des micro-ondes dans le volume utile du filtre,

— une augmentation de la quantité de particules brûlées et un meilleur rendement de la combustion.

Un clapet de commutation 16 commandé dirige le flux principal des gaz d'échappement vers le filtre en fonctionnement dont le résonateur est raccordé en aval à la conduite 12.

Cette disposition constructive n'est pas limitative du fait que l'on pourra dériver temporairement les gaz d'échappement au travers d'un conduit by-pass sans filtre en procédant au nettoyage d'un filtre principal unique tel que décrit précédemment.

On notera que le débit des gaz d'échappement ou de l'air traversant le filtre pendant le nettoyage doit être suffisant pour entretenir la combustion des particules mais limité pour éviter d'évacuer trop rapidement les calories produites qui participent à l'entretien de cette combustion.

Ce débit peut être unidirectionnel mais on observe que la modification du sens de circulation des gaz dans le filtre pendant le nettoyage permet d'augmenter le rendement de la combustion.

En effet, dans un premier temps, le sens de circulation aval → amont favorise dans le filtre la création d'une zone de combustion qui part du centre vers la face avant du filtre, qui pourra être nettoyée au cours de la combustion.

Le sens de circulation amont → aval favorise la création d'une autre zone de combustion équivalente qui s'étend du centre vers la face arrière du filtre.

Un microprocesseur de commande non représenté assurera le pilotage de l'ensemble du processus de nettoyage du filtre.

Lorsque le filtre possède sensiblement le même diamètre extérieur que la cavité résonnante, son diamètre utile sera réduit par le masquage de la zone périphérique et centrale ainsi que représenté à la figure 2.

La figure 4 décrit un filtre dont la structure n'est pas modifiée et qui peut être un filtre courant du commerce. Dans ce cas, le diamètre intérieur de la cavité du résonateur est sensiblement plus grand que le diamètre extérieur du filtre.

Le filtre 13 est positionné axialement et radialement par des anneaux 20 en matériau diélectriques ou par tout autre dispositif qui permet de délimiter autour du filtre un espace annulaire dans lequel le champ des micro-ondes est relativement faible et ne participe pas à la combustion. Les anneaux 20 remplissent de la sorte la fonction de la couronne annulaire 18.

## Revendications

1. Dispositif d'élimination par micro-ondes des particules contenues dans les gaz d'échappement des moteurs Diesel dans lequel une source (6) à micro-ondes ($\lambda$) et un conducteur (5) du champ électromagnétique généré par ladite source est en liaison avec un résonateur (2 ou 3) monté sur un élément de la conduite (12) des gaz d'échappement qui contient un filtre (13) dont les extrémités amont et aval sont décalées vers l'intérieur de la cavité définie par le résonateur et délimitent deux chambres (14, 15), caractérisé par le fait que dans les deux chambres (14, 15) débouchent respectivement des conducteurs (4) du champ électromagnétique.

2. Dispositif selon la revendication 1, caractérisé par le fait que le résonateur délimite une cavité cylindrique excitée en mode TM 0lp.

3. Dispositif selon la revendication 1 ou 2, caractérisé par le fait que le champ électromagnétique est introduit dans le résonateur par des antennes émettrices (4), des iris, au travers d'ouvertures circulaires ou rectangulaires.

4. Dispositif selon l'une quelconque des revendications 1 à 3, caractérisé par le fait que le filtre (13) est à base de matériaux réfractaires à faibles pertes diélectriques.

5. Dispositif selon la revendication 4, caractérisé par le fait que le filtre (13) possède un évidement central longitudinal (17) fermé à une extrémité et/ou un masque d'extrémité en forme de couronne circulaire (18) qui délimite dans le filtre une zone extérieure annulaire dans laquelle les particules ne peuvent se fixer.

6. Dispositif selon l'une quelconque des revendications 1 à 5 dans lequel au moins deux résonateurs sont disposés en parallèle dans la conduite des gaz d'échappement respectivement dans des dérivations de celle-ci et qu'un clapet de commutation (16) dirige le flux vers un filtre (13) dont le résonateur (2, 3) est raccordé sur la conduite d'échappement (12) ou sur un autre filtre dans le but d'avoir toujours un filtre qui se charge de particules et au moins un autre filtre en phase d'élimination par micro-ondes de particules sous faible débit de gaz d'échappement du moteur.

7. Dispositif selon la revendication 6, caractérisé par le fait qu'il comporte des moyens pour que le sens de circulation des gaz nécessaires à la combustion au cours de la phase d'élimination par micro-ondes des particules, soit inversé au moins une fois pendant ladite phase.

8. Dispositif selon la revendication 7, caractérisé par le fait que le gaz nécessaire à la combustion est de l'air.

9. Dispositif selon l'une quelconque des revendications 1, 2, 4, 6, caractérisé par le fait que le diamètre du filtre est sensiblement inférieur au diamètre intérieur du résonateur et que ledit filtre est maintenu dans le résonateur par un moyen de calage.


## Patentansprüche

1. Vorrichtung zur Entfernung von in den Abgasen von Dieselmotoren enthaltenen Partikeln mittels Mikrowellen, bei der eine Quelle (6) für Mikrowellen (λ) und ein Leiter (5) für das von der Quelle erzeugte elektromagnetische Feld mit einem Resonator (2 oder 3) in Verbindung steht, der in einem Abschnitt der Abgasleitung (12) angeordnet ist, in dem ein Filter (13) vorgesehen ist, dessen vordere und hintere Enden in Richtung zum Inneren der Öffnung hin verschoben sind, die durch den Resonator gebildet wird, und die zwei Kammern (14, 15) begrenzen, dadurch gekennzeichnet, daß in die beiden Kammern (14, 15) die entsprechenden Leiter (4) für das elektromagnetische Feld münden.

2. Vorrichtung nach Anspruch 1, dadurch gekennzeichnet, daß der Resonator eine zylindrische Öffnung, die durch TM Olp-Moden erregbar ist, begrenzt.

3. Vorrichtung nach Anspruch 1 oder 2, dadurch gekennzeichnet, daß das elektromagnetische Feld dem Resonator mittels Sendeantennen (4), Blenden und kreisförmigen oder rechtwinkligen Öffnungen zugeführt wird.

4. Vorrichtung nach einem der Ansprüche 1 bis 3, dadurch gekennzeichnet, daß das Filter (13) auf der Basis feuerfester Materialien mit geringen dielektrischen Verlusten aufgebaut ist.

5. Vorrichtung nach Anspruch 4, dadurch gekennzeichnet, daß das Filter (13) eine mittige an einem Ende geschlossene Längsaussparung (17) und-/oder eine kronenförmige kreisförmige Endabschirmung (18) aufweist, welche im Filter eine ringförmige Außenzone begrenzt, in der die Partikel aufgefangen werden können.

6. Vorrichtung nach einem der Ansprüche 1 bis 5, bei der wenigstens zwei Roseonatoren parallel in der Abgasleitung bzw. in deren Abzweigungen angeordnet sind und wobei ein Umlenkventil (16) den Strom in Richtung eines Filters (13) lenkt, dessen Resonator (2, 3) mit der Abgasleitung (12) verbunden ist oder in Richtung eines anderen Filters lenkt, im Hinblick darauf, daß immer ein Filter mit Partikeln gefüllt wird und wenigstens ein anderes Filter zugleich von den Partikel mittels Mikrowellen beinur geringer Abgaszufuhr gereinigt wird.

7. Vorrichtung nach Anspruch 6, dadurch gekennzeichnet, daß sie eine Anordnung aufweist, mittels derer die Zirkulationsrichtung der zur Verbrennung erforderlichen Gase während der Entfernung der Partikel mittels Mikrowellen wenigstens einmal während dieses Zeitraums umgekehrt wird.

8. Vorrichtung nach Anspruch 7, dadurch gekennzeichnet, daß das zur Verbrennung erforderliche Gas Luft ist.

9. Vorrichtung nach einem der Ansprüche 1, 2, 4, 6, dadurch gekennzeichnet, daß der Durchmesser des Filters im wesentlichen kleiner ist als der Innendurchmesser des Resonators und daß das Filter im Resonator durch eine Klemmanordnung gehalten wird.


## Claims

1. A device for eliminating by microwaves the particles contained in the exhaust gases of Diesel engines in which a source (6) of microwaves (λ) and a conductor (5) of the electromagnetic field generated by this source is connected with a resonator (2 or 3) mounted on a member of the exhaust gas duct (12) containing a filter (13) whose upstream and downstream ends are offset towards the interior of the cavity defined by the resonator and bound two chambers (14, 15), characterized in that the conductors (4) of the electromagnetic field communicate with the two chambers (14, 15) respectively.

2. A device as claimed in claim 1, characterized in that the resonator bounds a cylindrical cavity excited in TM Olp mode.

3. A device as claimed in claim 1 or 2, characterized in that the electromagnetic field is introduced into the resonator by transmitting antennae (4) or irises through circular or rectangular apertures.

4. A device as claimed in any one of claims 1 to 3, characterized in that the filter (13) has a base of refractory materials with low dielectric losses.

5. A device as claimed in claim 4, characterized in that the filter (13) has a longitudinal central recess (17) closed at one end and/or an end mask in the form of a circular crown (18) which bounds an annular external zone in the filter to which the particles cannot become attached.

6. A device as claimed in any one of claims 1 to 5 in which at least two resonators are disposed in parallel in the exhaust gas duct in the respective branches thereof and in that a switching valve (16) directs the flow towards a filter (13) whose resonator (2, 3) is connected to the exhaust duct (12) or to another filter so as always to provide a filter which is charged with particles and at least one other filter in which particles are eliminated by microwaves at a low rate of flow of engine exhaust gases.

7. A device as claimed in claim 6, characterized in that it comprises means allowing the direction of circulation of the gases needed for combustion during the stage of elimination of the particles by microwaves to be inverted at least once during this stage.

8. A device as claimed in claim 7, characterized in that the gas needed for combustion is air.

9. A device as claimed in any one of claims 1, 2, 4 and 6, characterized in that the diameter of the filter is substantially lower than the inner diameter of the resonator and in that the filter is held in the resonator by a wedging means.

FIG.1

FIG.2

COUPE AB

FIG.3

FIG.4